# EUROPÄISCHE PATENTSCHRIFT

(11) **EP 3 172 791 B1**
(45) Veröffentlichungstag und Bekanntmachung des Hinweises auf die Patenterteilung: **16.01.2019**
(21) Anmeldenummer: 15744532.1
(22) Anmeldetag: 23.07.2015
(51) Int. Cl.: H01M 2/02, H01M 2/10, H01M 10/42, H01M 10/48, H01M 2/34

(54) **ENERGIESPEICHER**
ENERGY STORAGE DEVICE
ACCUMULATEUR D'ÉNERGIE

(30) Priorität: 24.07.2014 DE 102014110428
(43) Veröffentlichungstag der Anmeldung: 31.05.2017
(73) Patentinhaber: Pendix GmbH, 08056 Zwickau (DE)
(72) Erfinder: FETHKE, Sebastian, 08058 Zwickau (DE)
(74) Vertreter: Bauer, Steffen
(86) Internationale Anmeldenummer: PCT/EP2015/066892
(87) Internationale Veröffentlichungsnummer: WO 2016/012546

(56) Entgegenhaltungen:
- WO-A1-2013/164120
- CN-A- 103 682 482
- DE-A1-102010 007 076
- DE-A1-102012 017 190
- DE-U1-202010 013 724
- GB-A- 167 231
- JP-A- H1 166 941
- US-A- 5 773 962
- US-A1- 2012 326 665

## Beschreibung

Energiespeicher für Fahrräder mit elektrischem Hilfsantrieb.

Die Erfindung betrifft einen intelligenten Energiespeicher für mobile Verbraucher. Das Anwendungsgebiet der Erfindung sind Fahrräder mit elektrischem Hilfsantrieb, so genannte Pedelecs.

Elektrische Fahrzeugantriebe benötigen eine Energiequelle in Form einer Batterie. Aus ökonomischer und ökologischer Sicht kommen hierfür ausschließlich wieder aufladbare Ausführungen in Frage, die entweder fest im Fahrzeug verbaut oder abnehmbar ausgebildet sind. Die jeweils günstigere Variante hängt vor allem vom Fahrzeugtyp und der erforderlichen Ladekapazität ab. Ein Vorteil abnehmbar ausgebildeter Energiespeicher besteht darin, dass durch einfachen Austausch eines entladenen Energiespeichers gegen einen geladenen Energiespeicher geringere Ladekapazitäten und damit kürzere Ladezeiten und geringere Masse möglich sind, so dass der Energiespeicher als zu bewegende Masse einen geringeren Anteil der Leistung des Antriebs benötigt. Dies wirkt sich beispielsweise bei Fahrrädern mit unterstützendem Elektroantrieb auch im Muskelkraftbetrieb vorteilhaft aus, da geringere zu bewegende Masse gleichbedeutend mit leichterem Tritt ist.

Der Erfindung liegt die Aufgabe zugrunde, einen abnehmbar ausgebildeten Energiespeicher für Fahrräder mit elektrischem Hilfsantrieb in Bezug auf Handhabbarkeit sowie Effizienz zu verbessern.

Die Aufgabe wird mit einem Energiespeicher gelöst, der eine Zelleinheit mit angeschlossenem Batteriemanagement-System, eine mit dem Batteriemanagement-System verbundene Anzeigeeinrichtung, mit dem Batteriemanagement-System verbundene Kontaktmittel zur Verbindung mit dem Fahrrad einerseits und zum Laden der Zelleinheit andererseits wenigstens in Form von Hochstrom-Kontakten und eine mit dem Batteriemanagement-System verbundene Eingabeeinrichtung umfasst. Zelleinheit mit Batteriemanagement-System, Anzeigeeinrichtung, Eingabeeinrichtung und Kontaktmittel sind in einem Gehäuse angeordnet, das mit Befestigungsmitteln für die Befestigung an einem den Hilfsantrieb aufweisenden Fahrrad versehen ist. Die Befestigung erfolgt mittels einer Mehrzahl Bajonett-Verschlüsse, die in einem Gehäuseboden unsymmetrisch, d.h. auf einem Teilkreisdurchmesser unter unsymmetrischer Winkellage oder auf wenigstens zwei Teilkreisdurchmessern auch bei symmetrischer Winkellage angeordnet ist, woraus sowohl komfortable Einhand-Entnahme als auch korrekte Kontaktierung folgen. Der erfindungsgemäße Energiespeicher zeichnet sich dadurch aus, dass als Kontaktmittel neben den Hochstrom-Kontakten im Vergleich zu diesen kürzere Pilot-Kontakte vorgesehen sind, die mit dem Batteriemanagement-System der Zelleinheit verbunden sind. Weil die Pilotkontakte somit beim Lösen des Energiespeichers vom Mobilgerät früher trennen als die Hochstromkontakte, werden diese durch das Batteriemanagement-System spannungsfrei geschaltet, wodurch ein Schaltlichtbogen mit Kontaktbrand an den Hochstrom-Kontakten vermieden wird.

Der erfindungsgemäße Energiespeicher ist derart ausgebildet, dass die Anzeigeeinrichtung, die Eingabeeinrichtung und das Batteriemanagement-System an ein serielles Bussystem angeschlossen sind. Das Zugriffsmanagement des Bussystems erfolgt vorteilhaft durch Synchronisation und Identifikation der zu übertragenden Nachrichten, indem jede Einheit über eine Controllerschaltung verfügt, mittels der sie an das Bussystem angeschlossen ist. Eine bevorzugte Ausführung des Bussystems stellt beispielsweise der CAN-Bus gemäß ISO 11898 dar. Vorteilhaft ausgestaltet wird die Erfindung, indem die Eingabeeinrichtung als Wahlschalter ausgebildet ist. Dabei kann der Wahlschalter als Ein-Aus-Schalter und/oder zum stufenlosen oder diskreten Stellen eines elektrischen Parameters wie beispielsweise des Batteriestroms zum Stellen der Leistung des Fahrradantriebs ausgestaltet sein, indem entsprechende Nachrichten über eine das Bussystem nutzende Kommunikationsverbindung an das Batteriemanagement-System, die Anzeigeeinrichtung und eine geeignete Empfangseinrichtung des Fahrradantriebs übermittelt werden. Eine weitere vorteilhafte Ausgestaltung der Erfindung besteht darin, dass die Anzeigeeinrichtung als Leuchtmittel ausgebildet ist. Eine bevorzugte Ausbildung der Anzeigeeinrichtung ist dabei in Form eines Leuchtringes gegeben, der an eine oder mehrere Lichtquellen angeschlossen ist. So können bei Verwendung mehrerer Lichtquellen oder einer verschiedene Frequenzen erzeugenden Lichtquelle beispielsweise verschiedene Werte eines elektrischen Parameters, beispielsweise des Ladezustandes der Zelleinheit, oder verschiedene elektrische Parameter wie beispielsweise kritischer Ladezustand der Zelleinheit und vorgewählte Leistungsstufe symbolisch dargestellt werden.

Ein Ausführungsbeispiel eines erfindungsgemäßen Energiespeichers wird nachfolgend anhand der Zeichnung näher erläutert. Der dargestellte Energiespeicher versorgt einen Traktionsantriebes eines Fahrrades mit Energie. Die Zeichnung zeigt in
Fig. 1 einen Energiespeicher in Halbschnittdarstellung und
Fig. 2 ein Blockschaltbild eines Energiespeichers in Verbindung mit einem elektrischen Hilfsantrieb eines Fahrrads.

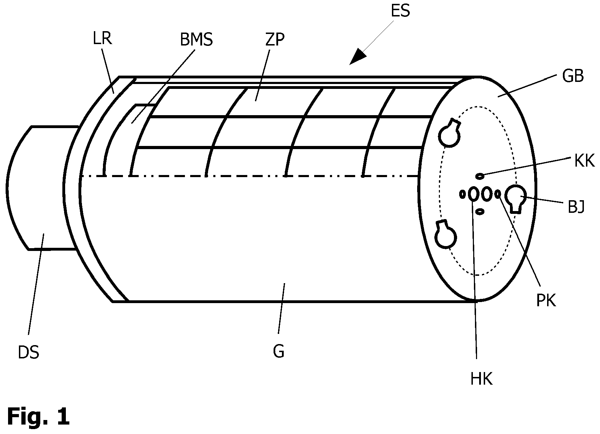

Fig. 1 zeigt einen Energiespeicher ES nach der Erfindung zur Energieversorgung eines elektrischen Fahrrad-Hilfsantriebes. Eine hierfür geeignete Zelleinheit ZP liefert eine Nennspannung von bevorzugt 48 V. Die Zelleinheit ZP ist mit einem Batteriemanagement-System BMS ausgestattet und zusammen mit diesem in einem Gehäuse G angeordnet. Mit dem Gehäuse G ist eine Anzeigeeinrichtung in Form eines Lichtrings LR verbunden, der von einer schaltungstechnisch mit dem Batteriemanagement-System BMS verbundenen Lichtquelle gespeist wird. Der Lichtring LR kann als Anzeigeeinrichtung für die gewählte Motorleistung des Traktionsantriebes oder den Ladezustand der Zelleinheit ZP dienen. Bei der Lichtquelle handelt es sich vorzugsweise um eine oder, beispielsweise im Falle eines in mehrere Abschnitte unterteilten Lichtringes LR, eine Mehrzahl LED, die verschiedenfarbig ausgewählt sein können. Das Gehäuse G ist an seinen Enden einerseits von einer Bodenplatte GB und andererseits von einer Eingabeeinrichtung in Form eines Wahlschalters DS abgeschlossen. Der Wahlschalter DS dient zur Einstellung der Motorleistung des Antriebes. Vorzugsweise ist der Wahlschalter DS als Rast-Drehschalter für drei Leistungsstufen ausgeführt. Der Wahlschalter DS verfügt zudem über eine Aus-Schaltstellung oder einen Ein-Aus-Schaltknopf. Die Bodenplatte GB weist Befestigungsmittel BJ auf, mit denen der Energiespeicher mit einer Haltevorrichtung am Fahrrad, verbunden wird. Die Befestigungsmittel BJ sind drei auf einem Teilkreis mit unsymmetrischer Winkellage zueinander angeordnete Bajonettbuchsen, so dass die Haltevorrichtung des Fahrrads drei in entsprechender Winkellage und auf gleichem Teilkreisdurchmesser angeordnete Bajonettstifte aufweist. In der Bodenplatte GB sind weiterhin elektrische Kontaktmittel angeordnet. Die elektrischen Kontaktmittel bestehen aus einem Paar Hochstrom-Kontakten HK, einem Paar Kommunikations-Kontakten KK und einem Paar Pilot-Kontakten PK geringerer Länge als die Hochstrom-Kontakte HK. Die Anordnung der Kontaktmittel ist beispielhaft dargestellt und kann in jeder geeigneten Weise ausgeführt sein. Die Befestigungsmittel BJ können sowohl zur alleinigen Befestigung des Energiespeichers ES ausgelegt sein als auch neben weiteren, dann für die Befestigung des Energiespeichers ES zuständigen Haltemitteln ausschließlich zur Lagedefinition des Energiespeichers ES bezüglich der elektrischen Kontaktmittel dienen.

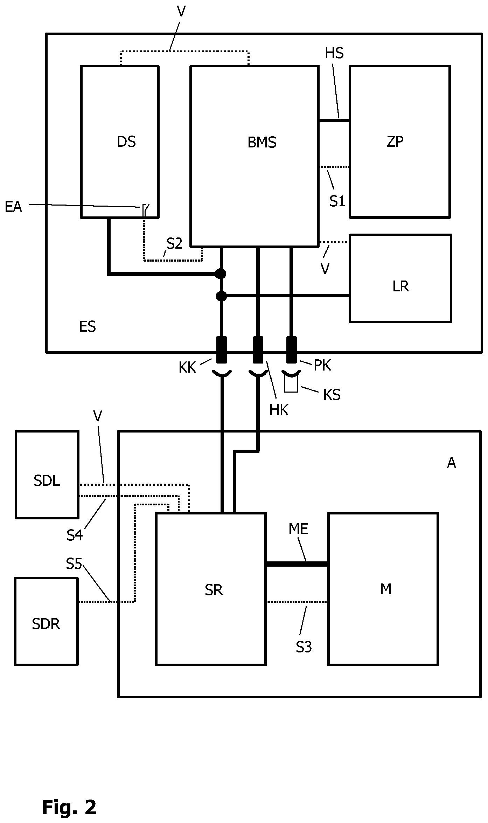

Die Wirkungsweise des Energiespeichers ES gemäß Fig. 1 wird anhand des Blockschaltbildes nach Fig. 2 erläutert. Das Blockschaltbild nach Fig. 2 zeigt neben dem erfindungsgemäßen Energiespeicher ES einen Antrieb A, die mittels der Kontaktmittel für die Hochstrom-Verbindung HK, die Kommunikations-Verbindung KK und die Pilot-Verbindung PK miteinander verbunden sind. Die antriebsseitige Pilot-Verbindung PK ist als Kurzschluss der Pilotleitungen ausgebildet, wodurch beim Entnehmen des Energiespeichers ES das Trennen der Kontaktmittel erkannt wird. Weil die Pilot-Kontakte PK aufgrund ihrer gegenüber den Hochstrom-Kontakten HK geringeren Länge früher trennen als die HochstromKontakte HK, werden diese durch das Batteriemanagement-System BMS spannungsfrei geschaltet und ein Schaltlichtbogen mit Kontaktbrand an den Hochstrom-Kontakten HK vermieden. Der Energiespeicher ES umfasst die Zelleinheit ZP, die mit dem Batteriemanagement-System BMS über ein Hochstrom-Leitungspaar HS und eine erste Sensorleitung S1 verbunden ist. Über die Sensorleitung S1 werden Spannung der Einzelzellen und Temperatur der Zelleinheit abgefragt und daraus der Ladezustand der Zelleinheit ZP bestimmt. Mit dem Batteriemanagement-System BMS ist ferner die Eingabeeinrichtung in Form des Rast-Drehschalters DS verbunden. Diese Verbindung wird einmal durch eine zweite Sensorleitung S2, an die seitens des Rast-Drehschalters DS der Ein-Aus-Schalter EA angeschlossen ist, und zum zweiten durch das Kommunikations-Leitungspaar realisiert, indem der Rast-Drehschalter DS neben der Betätigungsvorrichtung in Form eines Drehknopfes über eine elektronische Schnittstelle verfügt, die dem Anschluss des Rast-Drehschalters DS an das Kommunikations-Leitungspaar dient. Die Elektronik des Rast-Drehschalters DS erhält über eine Versorgungsleitung V die erforderliche Betriebsspannung. In gleicher Weise, nämlich mittels des Kommunikations-Leitungspaares und einer Versorgungsleitung V ist die Anzeigeeinrichtung in Form des Lichtrings LR an das Batteriemanagement-System BMS angeschlossen. Der Antrieb A besteht, soweit dies für die Erfindung von Bedeutung ist, aus einem Motor M und einer Regeleinrichtung SR, die mittels Phasenstromleitungen ME und einer dritten Sensorleitung S3 miteinander verbunden sind. An die Regeleinrichtung SR sind ferner über eine vierte Sensorleitung S4 ein Drehmomentsensor SDL und über eine fünfte Sensorleitung S5 ein Drehzahlsensor SDR angeschlossen. Der Drehmomentsensor SDL ist in der dargestellten Ausführung der Erfindung, einem Energiespeicher ES für einen Fahrrad-Elektroantrieb, an einem Standard-Tretlager angeordnet und erhält über die Versorgungsleitung V von der Regeleinrichtung SR seine Betriebsspannung, der Drehzahlsensor SDR kann entsprechend mit dem Hinterrad gekoppelt sein. Als Kommunikations-Verbindung kommt ein serielles Bussystem, vorzugsweise ein CAN-Bus gemäß ISO 11898 zur Anwendung. Demgemäß verfügen die angeschlossenen Einheiten Batteriemanagement-System BMS, Rast-Drehschalter DS, Lichtring LR auf Seiten des Energiespeichers ES und Regeleinrichtung SR auf Seiten des Antriebs A über die hierfür erforderlichen, dem Fachmann bekannten standardisierten schaltungs- und programmtechnischen Voraussetzungen. Mittels des Rast-Drehschalters DS wählt der Benutzer eine Unterstützungsstufe aus, die von der Regeleinrichtung SR als Vorgabe für die Leistungsaufnahme des Motors M interpretiert wird, wobei die Regeleinrichtung SR zur Steuerung der in Form der gewählten Unterstützungsstufe gewählten Parameter Kurbelwellendrehmoment und Motordrehzahl Istwerte von den angeschlossenen Sensoren für Drehmoment SDL und Drehzahl SDR erhält. Zur Aufladung der Zelleinheit ZP kann der Energiespeicher ES aus der Halterung am Fahrrad entnommen und in einer bezüglich der Kontaktierung entsprechenden Ladestation positioniert werden, die im Übrigen, insbesondere hinsichtlich ihrer elektrischen Funktion in bekannter Weise ausgebildet sein kann.

Der erfindungsgemäße Energiespeicher ES zeichnet sich dadurch aus, dass Entnahme und Einsatz einhändig erfolgen können und die Abgabe der gespeicherten Energie mittels eines effizienten, standardisierten Datentransfers gesteuert wird. Indem Eingabeeinrichtung, Anzeigeeinrichtung, Batteriemanagement-System und Zelleinheit in einem Gehäuse angeordnet sind und die Befestigung desselben an einem

Fahrrad mit geringem Aufwand verbunden ist, eignet sich der erfindungsgemäße Energiespeicher zudem auch für Nachrüstbausätze oder ähnliches.

### Bezugszeichenliste

- ES: Energiespeicher
- LR: Anzeigeeinrichtung, Lichtring
- BMS: Batteriemanagement-System
- ZP: Zelleinheit
- DS: Eingabeeinrichtung, Drehschalter
- G: Gehäuse
- GB: Gehäuseboden
- BJ: Bajonettbuchsen
- HK: Hochstrom-Kontakte
- KK: Kommunikations-Kontakte
- PK: Pilot-Kontakte
- EA: Ein-Aus-Schalter
- S*n*: Sensorleitung
- V: Betriebsspannungsleitung
- HS: Hochstrom-Leitungen
- A: Antrieb
- M: Motor
- SR: Regeleinrichtung
- SDL: Drehmoment-Sensor
- SDR: Drehzahl-Sensor
- ME: Phasenstromleitungen

## Patentansprüche

1. Energiespeicher für Fahrräder mit elektrischem Hilfsantrieb (M), wenigstens umfassend eine Zelleinheit (ZP) mit angeschlossenem Batteriemanagement-System (BMS), eine mit dem Batteriemanagement-System (BMS) verbundene Anzeigeeinrichtung (LR), mit dem Batteriemanagement-System (BMS) verbundene Kontaktmittel zur Verbindung mit Kontaktmitteln des Fahrrads wenigstens in Form von Hochstrom-Kontakten (HK), eine mit dem Batteriemanagement-System (BMS) verbundene Eingabeeinrichtung (DS), wobei Zelleinheit (ZP) mit Batteriemanagement-System (BMS), Anzeigeeinrichtung (LR), Eingabeeinrichtung (DS) und Kontaktmittel (HK) in einem Gehäuse (G) angeordnet sind, und Mittel zur Befestigung an einem den Hilfsantrieb (M) aufweisenden Fahrrad in Form einer Mehrzahl in einem Gehäuseboden (GB) unsymmetrisch angeordneter Bajonett-Verschlüsse (BJ), **dadurch gekennzeichnet, dass** die Kontaktmittel wenigstens Hochstrom-Kontakte (HK) und Pilot-Kontakte (PK) umfassen, wobei die Pilot-Kontakte (PK) kürzer sind als die Hochstrom-Kontakte (HK).

## Claims

1. Energy store for bicycles with an auxiliary electric drive (M), at least comprising a cell unit (ZP) with connected battery management system (BMS), an indicator device (LR) connected to the battery management system (BMS), contact means, connected to the battery management system (BMS), for connecting to contact means of the bicycle at least in the form of high-power contacts (HK), an input device (DS) connected to the battery management system (BMS), wherein the cell unit (ZP) with battery management system (BMS), indicator device (LR), input device (DS) and contact means (HK) are arranged in a housing (G), and means for fastening to a bicycle having the auxiliary drive (M) in the form of a plurality of bayonet connections (BJ) arranged asymmetrically in a housing base (GB), **characterized in that** the contact means comprise at least high-power contacts (HK) and pilot contacts (PK), wherein the pilot contacts (PK) are shorter than the high-power contacts (HK).

## Revendications

1. Accumulateur d'énergie pour bicyclettes équipées d'un entraînement auxiliaire électrique (M), comprenant au moins une unité à cellule (ZP) pourvue d'un système de gestion de batterie (BMS) connecté, un dispositif d'affichage (LR) relié au système de gestion de batterie (BMS), des moyens de contact reliés au système de gestion de batterie (BMS) et destinés à être reliés à des moyens de contact de la bicyclette au moins sous la forme de contacts pour courant fort (HK), un dispositif de saisie (DS) relié au système de gestion de batterie (BMS), dans lequel l'unité à cellule (ZP) avec le système de gestion de batterie (BMS), le dispositif d'affichage (LR), le dispositif de saisie (D S) et les moyens de contact (HK) sont disposés dans un boîtier (G), et des moyens permettant une fixation à une bicyclette comportant l'entraînement auxiliaire (M) sous la forme d'une pluralité de fermetures à baïonnette (BJ) disposées de manière asymétrique dans un fond de boîtier (GB),
**caractérisé en ce que** les moyens de contact comprennent au moins des contacts pour courant fort (HK) et des contacts pilotes (PK), dans lequel les contacts pilotes (PK) sont plus courts que les contacts pour courant fort (HK).
